# EUROPEAN PATENT APPLICATION

(11) **EP 4 742 095 A1**
(43) Date of publication of application: **13.05.2026**
(21) Application number: 23945203.0
(22) Date of filing: 13.07.2023
(51) Int. Cl.: G06K 19/16, G06K 19/06

(54) **LABEL FOR AUTHENTICATION OF PRODUCT AND SYSTEM FOR AUTHENTICATING PRODUCT USING SAME**

(71) Applicant: RMG Co., Ltd, Gunpo-si, Gyeonggi-do 15850 (KR)
(72) Inventor: KIM, Hee Jeong, Uiwang-si Gyeonggi-do 16045 (KR)
(74) Representative: BCKIP Part mbB
(86) International application number: PCT/KR2023/010003
(87) International publication number: WO 2025/013974

(57) **Abstract**

The present invention discloses a label for authentication of a product, the label having high security and an improved appearance, and a system for authenticating a product using same. The present invention may provide a label for authentication of a product and a system for authenticating a product using same, the label being composed of: a first code layer configured to comprise a first code composed of first authentication information for a predetermined product; a second code layer which is provided on the first code layer and comprises a second code composed of second authentication information for the predetermined product; and a partition layer interposed between the first code layer and the second code layer and configured to selectively cover the first code of the first code layer in response to a change in the surrounding environment so that only the second code of the second code layer is visibly exposed, wherein the first code of the first code layer is composed of a three-dimensional hologram, and the second code of the second code layer is composed of a two-dimensional pattern.

## Description

### [Technical Field]

The present disclosure relates to a system for authenticating that a predetermined product is a genuine product and, more particularly, to an authentication label attached to the predetermined product and an authentication system using the label.

### [Background Art]

Due to the recent growth of counterfeit products industry, the number of consumers who suffer fraud by mistakenly purchasing counterfeit products as genuine products is increasing, and financial and property losses of manufacturers producing genuine products and sellers distributing them are also significantly increasing. Thus, the manufacturers and sellers apply various means for authenticating their products. For example, radio codes such as radio frequency identification (RFID) codes, two-dimensional codes such as bar codes and quick response (QR) codes, and three-dimensional codes such as holograms are applied as means for authenticating genuine products. Generally, these codes are manufactured in the form of labels or tags having a predetermined size, and such authentication labels are applied to products to be authenticated.

Among these means, the hologram has recently been gaining attention from manufacturers and sellers for product authentication. The hologram refers to a pattern recorded on a two-dimensional plane using holographic principles, or a medium including such a pattern, and may virtually realize a three-dimensional image on a plane by interference of light emitted from the surroundings. Such a hologram has an advantage in that various types of information on a target object (i.e., product) may be simultaneously superimposed and recorded on a single medium and then reproduced as a three-dimensional image. In recent years, security elements such as micro-text, digital latent images, laser hidden images, demetallizing, and functional materials are added to embossed hologram technology in which patterns are formed in relief, thereby greatly enhancing the security of holograms.

However, with the rapid development of image processing software technology and hardware technology such as computers, printers, scanners, copiers, and CCD cameras, counterfeiting may be performed with a high level of sophistication, and even labels or tags including holograms, which are three-dimensional codes, may be replicated. Thus, in order to prevent counterfeit products through product authentication, it is required to improve the security of an authentication label. In addition, since the authentication label is attached to a product, it should not degrade the appearance of the target product. Therefore, the authentication label needs to have an appropriate size and appearance so as to provide enhanced security while not deteriorating the appearance of the product to which it is attached.

### [Disclosure]

### [Technical Problem]

The present disclosure has been made to solve the above-described problems, and an object of the present disclosure is to provide a genuine-product authentication label having enhanced security and an authentication system using the same.

Another object of the present disclosure is to provide an authentication label having a compact size and an improved appearance, and an authentication system using the same.

### [Technical Solution]

In order to solve the above-described problems, a genuine-product authenticating label according to an embodiment of the present disclosure may include a first code layer configured to include a first code composed of first authentication information for a predetermined product, a second code layer provided on the first code layer and including a second code composed of second authentication information for the predetermined product, and a partition layer interposed between the first code layer and the second code layer and configured to selectively cover the first code of the first code layer in response to a change in a surrounding environment so that only the second code of the second code layer is visibly exposed, and the first code of the first code layer may be formed of a three-dimensional hologram, and the second code of the second code layer may be formed of a two-dimensional pattern.

The first code of the first code layer may include a hologram configured to display a predetermined three-dimensional image only in response to light irradiated from a specific direction.

The partition layer may be configured to transition from a transparent state to an opaque state in response to irradiation with light having an intensity equal to or greater than a predetermined level. The partition layer may be configured to transition from a transparent state to an opaque state in response to heating to a temperature equal to or greater than a predetermined temperature.

A genuine-product authentication system according to an embodiment of the present disclosure may include a genuine-product authentication label provided on a predetermined product and including a code composed of authentication information for the predetermined product, and an authentication server including a management module configured to receive the code of the genuine-product authentication label of the predetermined product from a predetermined terminal device, and an authentication module configured to perform authentication of the predetermined product using the received code, and the genuine- product authentication label may include a first code layer configured to include a first code composed of first authentication information for the predetermined product, a second code layer provided on the first code layer and including a second code composed of second authentication information for the predetermined product, and a partition layer interposed between the first code layer and the second code layer and configured to selectively cover the first code of the first code layer in response to a change in a surrounding environment so that only the second code of the second code layer is visibly exposed, and the first code of the first code layer may be formed of a three-dimensional hologram, and the second code of the second code layer may be formed of a two-dimensional pattern.

The partition layer of the genuine-product authentication label may be configured to transition from a transparent state to an opaque state in response to irradiation with light having an intensity equal to or greater than a predetermined level, or the partition layer of the genuine-product authentication label may be configured to transition from the transparent state to the opaque state in response to heating to a temperature equal to or higher than a predetermined temperature.

### [Advantageous Effects]

In accordance with the present disclosure, the genuine-product authentication label may include a first code having basic authentication information and a second code having additional authentication information. By including both the first code and the second code in a redundant manner, the genuine-product authentication label and an authentication system using the same can basically provide a high level of security with respect to genuine-product authentication.

Further, in the present disclosure, since the second code is disposed to overlap the first code, the genuine-product authentication label can have a compact size, and since the second code may be concealed so as not to be distinguished from the first code, the appearance of not only the genuine-product authentication label but also a product to which the label is attached can be improved. Furthermore, since the second code is configured to be selectively and clearly visible from the first code by a partition layer, the second code can be recognized more accurately. Thus, the genuine-product authentication label and the authentication system using the same according to the present disclosure can provide further enhanced security and authentication capability while improving the appearance of a product to be authenticated.

Effects to be achieved by the present disclosure are not limited to effects mentioned in the following detailed description, and other effects that are not mentioned may be evidently understood by a person having ordinary skill in the art to which the present disclosure pertains from the following description together with the accompanying drawings.

### [Description of Drawings]

FIG. 1 is a plan view illustrating a genuine-product authentication label according to the present disclosure.
FIG. 2 is a partial sectional view of the genuine-product authentication label taken along line A-A of FIG. 1.
FIG. 3 is a schematic view illustrating another example of a hologram applied to the genuine-product authentication label according to the present disclosure.
FIG. 4 is a plan view illustrating a function of a partition layer of the genuine-product authentication label of FIG. 1.
FIG. 5 is a plan view illustrating another example of a genuine-product authentication label according to the present disclosure.
FIG. 6 is a partial sectional view of another example of the genuine-product authentication label taken along line B-B of FIG. 5.
FIG. 7 is a schematic view illustrating a genuine-product authentication system using the genuine-product authentication label according to the present disclosure.
FIG. 8 is a signal processing diagram illustrating a genuine-product authentication method performed based on the genuine-product authentication system of FIG. 7.

### [Mode for Invention]

Examples of a genuine-product authentication label and a genuine-product authentication system using the same according to the present disclosure will be described in detail below with reference to the accompanying drawings.

In the description of these examples, the same or similar components will be denoted by the same reference numerals, and redundant descriptions thereof will be omitted. In the following description, terms such as "module" and "unit" used for components are assigned or used interchangeably solely for convenience of description and do not in themselves imply any distinction in meaning or function. Further, in describing the embodiments disclosed herein, detailed descriptions of related well-known technologies will be omitted when it is determined that such descriptions may obscure the gist of the embodiments disclosed herein. In addition, the accompanying drawings are provided merely to facilitate understanding of the examples disclosed herein, and the technical spirit disclosed herein is not limited by the accompanying drawings. It should be understood that all modifications, equivalents, and substitutes falling within the spirit and technical scope of the present application are included.

Terms including ordinal numbers such as "first" and "second" may be used to describe various components, but the components are not limited by such terms. These terms are used only for the purpose of distinguishing one component from another component.

When a component is referred to as being "connected to" or "coupled to" another component, it should be understood that the component may be directly connected or coupled to the other component, or intervening components may be present therebetween. On the other hand, when a component is referred to as being "directly connected to" or "directly coupled to" another component, it should be understood that no intervening components are present therebetween.

Singular expressions include plural expressions unless the context clearly indicates otherwise.

In the present disclosure, terms such as "comprise," "include," or "have" are intended to specify the presence of features, numbers, steps, operations, components, parts, or combinations thereof described in the specification, but are not intended to preclude the presence or addition of one or more other features, numbers, steps, operations, components, parts, or combinations thereof. For the same reason, it should be understood that the present disclosure also encompasses combinations in which some features, numbers, steps, operations, components, or parts are omitted from the combinations of related features, numbers, steps, operations, components, and parts described using the foregoing terms, as long as they do not depart from the intended technical objectives and effects of the disclosed invention.

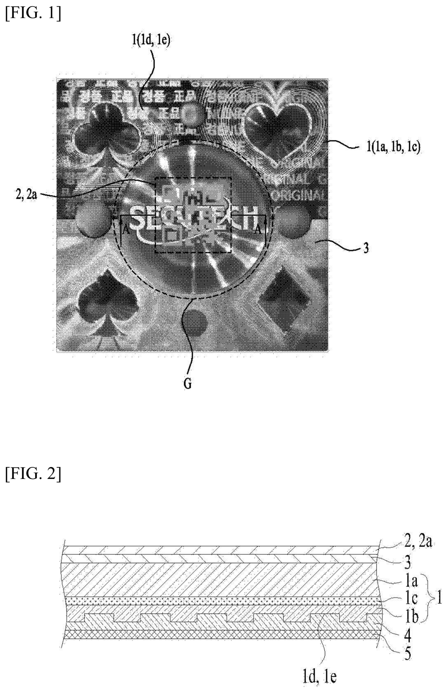

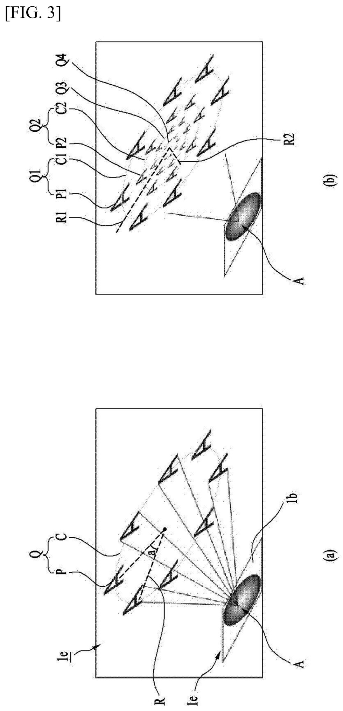

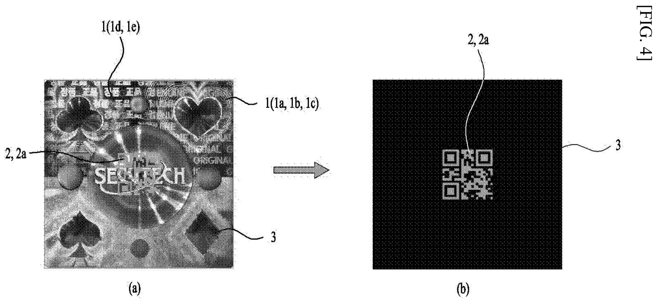

FIG. 1 is a plan view illustrating a genuine-product authentication label according to the present disclosure, and FIG. 2 is a partial sectional view of the genuine-product authentication label taken along line A-A of FIG. 1. FIG. 3 is a schematic view illustrating another example of a hologram applied to the genuine-product authentication label according to the present disclosure. Further, FIG. 4 is a plan view illustrating a function of a partition layer of the genuine-product authentication label of FIG. 1. With reference to these drawings, a configuration of the genuine-product authentication label according to the present disclosure will be described in detail below.

The examples described below relate to labels provided on a predetermined product and including codes used to authenticate that the predetermined product is a genuine product. However, the principles and configurations of the described examples may be directly applied, without substantial modification, to various media including codes for purposes other than authentication.

First, referring to FIGS. 1 and 2, a genuine-product authentication label according to the present disclosure (hereinafter, briefly referred to as an "authentication label") may basically include a first code layer 1. The first code layer 1 may include a first code 1d, 1e composed of first authentication information, which is basic authentication information for a predetermined product. The first code 1d, 1e may be formed of a hologram, which is a three-dimensional code. As discussed above in the related art, such a hologram is configured to reproduce a three-dimensional image in response to ambient light. As well illustrated in FIG. 1, the three-dimensional image may include various designs that appear three-dimensionally, that is, characters and shapes. Such a hologram may include, as the first authentication information, a three-dimensional image unique to a target product, and is not easily replicated. For example, the hologram, that is, the first code 1d, 1e, may be configured to be identical for a specific target product type, quality, or grade (i.e., to have the same unique three-dimensional image (the first authentication information)), and thus may indicate the identity of the target product. Thus, the target product may be primarily identified in terms of type, quality, or grade by the first code 1d, 1e, more precisely, by the three-dimensional image thereof (i.e., the first authentication information). Thereby, the authentication label can have high security and authentication capability.

More specifically, as illustrated in FIG. 2, the first code layer 1 may include a base layer 1a and a metal layer 1b provided on the base layer 1a.

The base layer 1a is a base material of the authentication label and functions as a substrate supporting other layers of the authentication label. Thus, the base layer 1a may be formed of a material having sufficient strength and flexibility even at a small thickness to perform such a function, and may be formed of, for example, a polyester (PET) film.

As described above, since the first code 1d, 1e of the first code layer 1, that is, the hologram, implements the three-dimensional image by interference of light, the hologram needs to be configured as an uneven pattern in order to generate such light interference. That is, the hologram is formed as an embossed pattern on a predetermined substrate. In order for such an uneven pattern to be appropriately formed and maintained, the substrate needs to have properties capable of withstanding pressure and heat required for pattern formation while maintaining permanent deformation caused by the pattern formation. For this reason, in the first code layer 1, a metal layer 1b is additionally provided on the base layer 1a, and the hologram, that is, the first code 1d, 1e, which is the uneven pattern, may be engraved on the metal layer 1b. More specifically, among various metallic materials, the metal layer 1b may be formed of aluminum having appropriate strength so as to be easily deformable. In addition, the metal layer 1b may be formed by deposition among various formation methods, and thus the first code layer 1 may maintain a thin thickness while including the first code 1d, 1e, which is the uneven pattern. A disc on which the first code 1d, 1e is engraved in advance may be pressed onto the metal layer 1b, and as the metal layer 1b is deformed, the first code 1d, 1e on the disc may be engraved and transferred onto the metal layer 1b. Further, when the metal layer 1b is placed on an upper surface of the base layer 1a, the first code 1d, 1e on the metal layer 1b may be exposed to the outside of the label and be damaged. Therefore, in order to prevent exposure and damage of the first code 1d, 1e, the metal layer 1b may be disposed below the base layer 1a. In addition, as described above, since the first code 1d, 1e should be formed by pressing the disc after the metal layer 1b is deposited under the base layer 1a, the first code 1d, 1e may be engraved on the exposed lower surface of the deposited metal layer 1b, as well illustrated in FIG. 2. Meanwhile, the base layer 1a may be formed of a transparent material so that the first code 1d, 1e on the metal layer 1b is visibly exposed to the outside of the label. With this configuration, the first code 1d, 1e is protected by the base layer 1a without being exposed to the outside, so that the authentication label can stably provide the authentication function without damage to the first code 1d, 1e.

The first code layer 1 may further include a printing layer 1c in addition to the base layer 1a and the metal layer 1b. The printing layer 1c may include various designs, that is, characters and shapes. Thus, by including the printing layer 1c, the first code layer 1 may display additional information together with the first code 1d, 1e. Further, the printing layer 1c may be disposed below the base layer 1a, which is configured to be transparent as described above so that designs included therein are visibly exposed to the outside, and may be disposed above the opaque metal layer 1b. That is, the printing layer 1c is interposed between the base layer 1a and the metal layer 1b. Thus, as illustrated in FIG. 2, an upper surface of the printing layer 1c may be in contact with a lower surface of the base layer 1a, and a lower surface of the printing layer may be in contact with an upper surface of the metal layer 1b. The printing layer 1c may be formed only of a painting layer made of a painting material (i.e., ink or paint) forming designs. Alternatively, the printing layer may be formed of a predetermined substrate layer, such as a thin film, and a painting layer printed on the substrate layer to form designs.

Such a printing layer 1c may display various types of general additional information related to the authentication label by designs included therein, and may further include authentication information for product authentication. More specifically, the printing layer 1c may include authentication designs printed with ultraviolet fluorescent paint. The ultraviolet fluorescent paint is configured to emit light only in response to ultraviolet light. Thus, such authentication designs do not appear under ordinary natural light, that is, in a normal environment, but appear from the authentication label in response to ultraviolet light when ultraviolet light is irradiated onto the authentication label. When such authentication designs appear upon irradiation of ultraviolet light, it may be determined that at least one condition for genuine-product authentication is satisfied. For this reason, the printing layer 1c and the authentication designs included therein can function as authentication means for genuine-product authentication.

When such a printing layer 1c is included, the first code layer 1 may be manufactured, by way of example, through the following process. First, a coating solution is prepared by mixing a release agent forming a release layer with an ultraviolet fluorescent paint, and the printing layer 1c may be formed on the lower surface of the base layer 1a to include a predetermined design using the prepared coating solution. Thereafter, the base layer 1a on which the printing layer 1c is formed is placed in a vacuum deposition apparatus so that the metal layer 1b is deposited on the lower surface of the printing layer 1c. Finally, the disc on which the first code 1d, 1e, that is, the hologram, is engraved is pressed onto the lower surface of the metal layer 1b while applying heat and pressure (that is, by pressing or laminating), so that the first code 1d, 1e may be engraved and transferred onto the lower surface of the metal layer 1b.

In the first code layer 1 manufactured as described above, the first code may be formed, by way of example, as a first hologram 1d configured to display a predetermined intended three-dimensional image under general lighting conditions. The first hologram 1d is a conventional hologram, and as described above, such a conventional hologram is configured to implement a three-dimensional image using interference of light provided in a general lighting environment without requiring special lighting conditions. As is well known, under general lighting conditions or environments, light is irradiated onto a predetermined target from different directions. Thus, the first hologram 1d may be described as being configured to display an intended predetermined three-dimensional image in response to light irradiated from a plurality of directions. FIGS. 1, 4, and 5 illustrate, by way of example, such a conventional hologram, that is, the first hologram 1d.

Meanwhile, the first code may also be formed as a second hologram 1e configured to display a predetermined design, that is, a three-dimensional image, only in response to light irradiated from a specific direction. As well illustrated in FIG. 3(a), the second hologram 1e may include a plurality of designs P (or patterns) that are engraved together in a predetermined region A (or a predetermined position and point) of the first code layer 1, more specifically, of the metal layer 1b. Further, the plurality of designs P are engraved while being arranged in a row along a circumferential path C having a predetermined radius, that is, the same radius R. More specifically, as illustrated in FIG. 3(a), the designs P on the circumferential path C may be spaced apart from one another by a predetermined central angle α. The plurality of designs P may be set to be identical to one another. For example, as illustrated, the same character "A" may be engraved. Further, since the predetermined region A has a considerably small size, the plurality of identical designs P may be engraved so as to be substantially overlapped with one another. Considering such a configuration, that is, the arrangement of the designs in a row along a single circumference C having the same radius R, the plurality of designs P may form a kind of matrix Q. Thus, the second hologram 1e may be described as including a design matrix Q disposed in the predetermined region A of the first code layer 1. The design matrix Q is composed of the designs P engraved while being arranged in a row along the circumferential path C having the predetermined radius R.

Natural light and artificial light under general lighting conditions, that is, in indoor and outdoor environments, are incident on a predetermined target from multiple directions, as described above. Under such general lighting conditions and environments, when light is irradiated from a plurality of directions, the plurality of designs P of the second hologram 1e in a predetermined region or point A are respectively implemented as three-dimensional images by the light incident from the respective directions. However, since these designs P are gathered in a small region or point A, the implemented three-dimensional images overlap with one another and become blurred, so that a clear three-dimensional image is not practically and visually displayed. In contrast, when light is irradiated from a single specific direction, that is, when a spotlight is irradiated onto the second hologram 1e, only one of the plurality of designs P that is positioned in correspondence with the incident direction of the light is implemented and displayed as a three-dimensional image, while the remaining designs P are not implemented as three-dimensional images. For example, when a flash light mounted on a smartphone is irradiated onto the second hologram 1e from any one direction, an intended three-dimensional image may be visually implemented from the second hologram 1e. Thus, the second hologram 1e displays no three-dimensional image under general lighting, whereas it displays an intended three-dimensional image when light is irradiated from a specific direction. That is, by applying such a second hologram 1e, the first code is configured to selectively display or visualize the first authentication information depending on the lighting conditions, and for the same reason, the first code layer 1 may be described as including the first code that is selectively visualized according to the lighting conditions for the authentication label. For this reason, the second hologram 1e hides its first authentication information, that is, the three-dimensional image, under general lighting, thereby further enhancing the security of the authentication label. In addition, if the first code such as the first hologram 1d that is continuously displayed is provided, it may degrade the appearance of the product to which the authentication label is attached. Therefore, the application of the second hologram 1e, which is selectively hidden depending on the light irradiation conditions, may result in a substantial improvement in the appearance of the product to which the authentication label is attached. In such a second hologram 1e, the design matrices Q may include different designs P and be provided in different regions A, and such a plurality of design matrices Q may further enhance security.

As illustrated in FIG. 3(b), the first code, that is, the second hologram 1e, may have a plurality of design matrices Q1, Q2, Q3, and Q4 including a plurality of designs P1 and P2 arranged along circumferential paths C1 and C2 having different radii R1 and R2, respectively, and such design matrices Q1 to Q4 may be provided in a predetermined single region or point A of the first code layer 1. That is, as an example, the second hologram 1e may include a first design matrix Q1 including a plurality of first designs P1 arranged along a first circumferential path C1 having a first radius R1, and a second design matrix Q2 including a plurality of second designs P2 arranged along a second circumferential path C2 having a second radius R2 that is different from the first radius R1, that is, smaller than the first radius R1, and the first and second design matrices Q1 and Q2 may be disposed together in a predetermined region or point A. With such a combination of the design matrices Q1 to Q4 in one region A, a three-dimensional image is not clearly displayed under general lighting conditions, whereas a more three-dimensional image may be better displayed in response to light irradiated from a specific direction. Thus, such a combination of the design matrices Q1 to Q4 may further enhance the security of the authentication label and improve the appearance of the product. In order to further enhance the effects described above, combinations of the design matrices Q1 to Q4 may include different designs P and be provided in different regions A.

In the authentication label according to the present disclosure, the first code layer 1 may include a first code composed of only one of the first and second holograms 1d, 1e, and even in this case, the first code layer 1 may provide sufficient security to the authentication label. On the other hand, the first code layer 1 may include a first code composed of both the first and second holograms 1d, 1e. In this case, the first code layer 1 may provide enhanced security to the authentication label through the redundant application of the first and second holograms 1d, 1e.

On the first coating layer 1 described above, the authentication label of the present disclosure may further include a second code layer 2. The second code layer 2 may include a second code 2a composed of second authentication information, which is additional authentication information for a predetermined product. The second code 2a may be formed of a planar pattern, which is a two-dimensional code. For example, the second code 2a may be a two-dimensional pattern code such as a barcode or a QR code, and as an example, the drawings of the present disclosure illustrate the QR code as the second code 2a. Such a planar pattern includes or represents predetermined information (e.g., characters and numerals) in the form of a shape, motif, or form (hereinafter, referred to as a "motif") of a predetermined size according to a predetermined rule, and such a motif may be subsequently converted or transformed into the corresponding information according to the same rule. That is, the second code 2a displays the second authentication information required for authentication in the form of a motif, which may be converted into the second authentication information during authentication of the product.

Unlike the first code 1d, 1e described above, the second code 2a may include a unique planar pattern, that is, second authentication information, for each of a plurality of different target products having the same type, quality, or grade (i.e., the same category). That is, the first code 1d, 1e may provide the same three-dimensional image to a plurality of different target products having the same type, quality, or grade, whereas the second code 2a may provide different, that is, distinguishable planar patterns (i.e., second authentication information) even for a plurality of different target products having the same type, quality, or grade. Thus, in addition to identification of the type of the target product by the first code 1d, 1e, the second code 2a may individually identify each of the plurality of target products. Therefore, by the addition of the second code layer 2 and the second code 2a, the authentication capability and security of the authentication label may be further enhanced. As an example, the second code 2a, that is, its planar pattern, may include, as the second authentication information, an identification code for distinguishing each of the plurality of target products and an encrypted passcode unique to each target product. The identification code may be, for example, a serial number of the target product, and may be used not only for authentication of the target product but also for verifying a distribution channel thereof. In addition, the passcode may be decrypted during authentication and used for a higher level of authentication. By the second code 2a including such second authentication information, the authentication label may serve as an independent authentication device for the target product.

While including the second code 2a as described above, the second code layer 2 may be provided on the first code layer 1. The second code layer 2 may be formed solely of a painting layer made of a painting material (that is, ink or paint) forming the second code 2a, that is, its planar pattern. On the other hand, in order to stably form and provide the second code 2a, the second code layer 2 may include a predetermined substrate layer made of a thin film or the like, and a painting layer printed on the substrate layer to form the second code 2a.

Since the second code layer 2 is disposed on the first code layer 1, the second code 2a is arranged to overlap the first code 1d, 1e. Thus, the authentication label according to the present disclosure may provide both the first and second codes 1d, 1e, and 2a to enhance security, while having a compact size due to their overlapping arrangement, as clearly illustrated in FIG. 1, and further may not degrade the appearance of the product to which it is attached due to such a small size. In addition, since the second code 2a is disposed on the first code 1d, 1e, if the second code 2a covers the first code 1d, 1e, the first code 1d, 1e may not be clearly visible. Therefore, the second code 2a may be formed to be smaller than the first code 1d, 1e. On the other hand, the first code 1d, 1e may be provided only in a region of the first code layer 1 that does not overlap the second code 2a. With such a configuration, both the first and second codes 1d, 1e, and 2a may be well exposed from the front surface of the authentication label, thereby allowing authentication to be easily performed.

Since the second code 2a is formed of an irregular planar pattern, it is more likely to degrade the appearance of the product compared to the first code 1d, 1e formed of the three-dimensional image. Thus, the first code layer 1 may be configured to visually conceal or hide the second code 2a disposed thereon. That is, the first code layer 1 may be configured to disguise the second code 2a as a part of the first code layer 1. More specifically, as illustrated in FIG. 1, the first code layer 1 may include a camouflage region G positioned directly below the second code 2a. The camouflage region G may have an area equal to or larger than that of the second code 2a so as to completely conceal the second code 2a. In addition, as an example, the camouflage region G may include a color identical or similar to that of the second code 2a. In the example illustrated in FIG. 1, both the camouflage region G and the second code 2a may be formed in the same gray color. On the other hand, the camouflage region G may include a three-dimensional image having a shape similar to that of the second code 2a. Due to such a camouflage region G, the second code 2a may be visually recognized as a part of the first code 1d, 1e or the first code layer 1, and thus may not be clearly exposed from the authentication label but instead may be concealed. That is, the second code 2a may have invisibility due to the camouflage region G. Thus, even while including a plurality of codes such as the first and second codes 1d, 1e, and 2a, the authentication label may not degrade the appearance of the product to which it is attached.

Meanwhile, in general, when a target product is authenticated using the second code 2a, an image of the second code 2a is acquired using a predetermined terminal device, and authentication information (i.e., second authentication information) may be extracted from the acquired image. However, as described above, due to the overlap of the first and second code layers 1 and 2, the second code 2a, more precisely, the image thereof, may be difficult to be accurately acquired due to interference with the adjacent first code 1d, 1e. For this reason, the authentication label of the present disclosure may further include a partition layer 3 configured to selectively block the first code layer 1 and the first code 1d, 1e thereof in response to changes in a surrounding environment.

As illustrated in FIG. 2, the partition layer 3 is disposed at least above the first code layer 1 to selectively block the first code layer 1 and the first code 1d, 1e thereof. Meanwhile, the partition layer 3 may be disposed below the second code layer 2 so that the second code layer 2 and the second code 2a thereof are clearly exposed during such blocking. That is, the partition layer 3 is interposed between the first code layer 1 and the second code layer 2. Thus, as illustrated in FIG. 2, an upper surface of the partition layer 3 may contact a lower surface of the second code layer 2, and a lower surface of the partition layer may contact an upper surface of the first code layer 1. Further, in order to reliably prevent interference between the second code 2a and the first code 1d, 1e, the partition layer 3 may be formed to have a size equal to or larger than that of the first code 1d, 1e so as to entirely cover the first code 1d, 1e. Further, as will be described in more detail below, the partition layer 3 may be configured to selectively change color, more specifically, to become opaque, depending on surrounding environmental conditions, so as to selectively cover the first code 1d, 1e. Thus, the partition layer 3 may be entirely formed of a material that enables such color change. On the other hand, the partition layer 3 may be formed of a thin substrate layer and a color-change layer stacked on the substrate layer and made of a color-changeable material.

More specifically, for example, the partition layer 3 may be configured to transition from a transparent state to an opaque state in response to irradiation of light of a predetermined intensity or higher. For this purpose, the partition layer 3 may be formed of a photochromic material or may include such a photochromic material. Such a photochromic material may have a property in which light transmittance is adjusted in response to the intensity of light irradiated from a light source. As an example, the photochromic material may be formed of a metal-halogen compound such as silver chloride or silver bromide. As another example, the photochromic material may be formed of a composite layer including tungsten trioxide, titanium dioxide, and silicon dioxide.

On the other hand, for example, the partition layer 3 may be configured to transition from a transparent state to an opaque state in response to heating to a temperature equal to or higher than a predetermined temperature. For this purpose, the partition layer 3 may be formed of a thermochromic material or may include such a thermochromic material. Such a thermochromic material has a property of adjusting its own color depending on a change in temperature. For example, the thermochromic material may typically be formed of vanadium oxide. In addition, a material in which titanium nitride nanoparticles are added to vanadium oxide may also be used as the thermochromic material.

The partition layer 3 formed of such a photochromic or thermochromic material is transparent under normal environmental conditions, that is, under a normal light intensity and at room temperature (see FIG. 4(a)), but may transition to the opaque state in response to a change in light intensity or temperature conditions (that is, a first condition change and a second condition change) (see FIG. 4(b)). As illustrated in FIG. 4(b), in the opaque state, the partition layer 3 may completely block the first code 1d, 1e of the first code layer 1 so that the first code is not visible. Instead, the second code 2a may be more clearly and visually exposed on the opaque partition layer 3. More specifically, as an example, in the case of discoloration in response to a change in the first condition, that is, a change in light intensity, light may be irradiated from a visible light or infrared (or ultraviolet) light source having an intensity equal to or greater than a predetermined level. By such light irradiation, the partition layer 3 becomes opaque, so that the first code 1d, 1e is not visible and only the second code 2a is visually exposed. On the other hand, as an example, in the case of discoloration in response to a change in the second condition, that is, a temperature change, the partition layer 3, that is, the thermochromic material included therein, may be configured to undergo discoloration in response to body temperature. Thereafter, when a user touches the authentication label with a hand or finger and heats it for a predetermined period of time or longer, the transparent partition layer 3 becomes opaque, so that the first code 1d, 1e is hidden so as not to be visible and only the second code 2a may become clearly visible. In such a second condition change, the discoloration threshold temperature may be set to a temperature other than body temperature, and a heating source may also be an object or device other than a human body. Therefore, by such selective covering by the partition layer 3, a clear image of the second code 2a may be acquired using a predetermined terminal device, and through accurate extraction of the second authentication information, the authentication capability and security of the authentication label may be significantly improved.

As additionally illustrated in FIG. 2, the authentication label according to the present disclosure may further include an adhesive layer 4 provided on a lower surface of the first code layer 1, more specifically, on a lower surface of the metal layer 1b thereof. By using the adhesive layer 4, the authentication label may be stably attached to a predetermined position of a target product. Further, a release paper layer 5 may be further provided on a lower surface of the adhesive layer 4. The release paper layer 5 may be formed of a conventional release paper and serves to protect the adhesive layer 4 and maintain its adhesive strength. The release paper layer 5 may be removed to expose the adhesive layer 4 when the authentication label is attached to the target product.

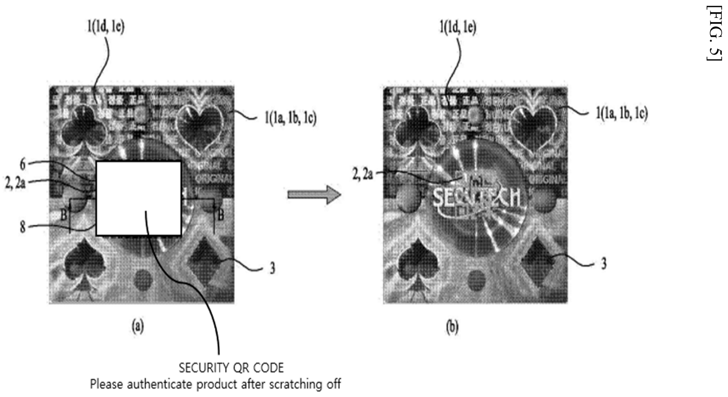

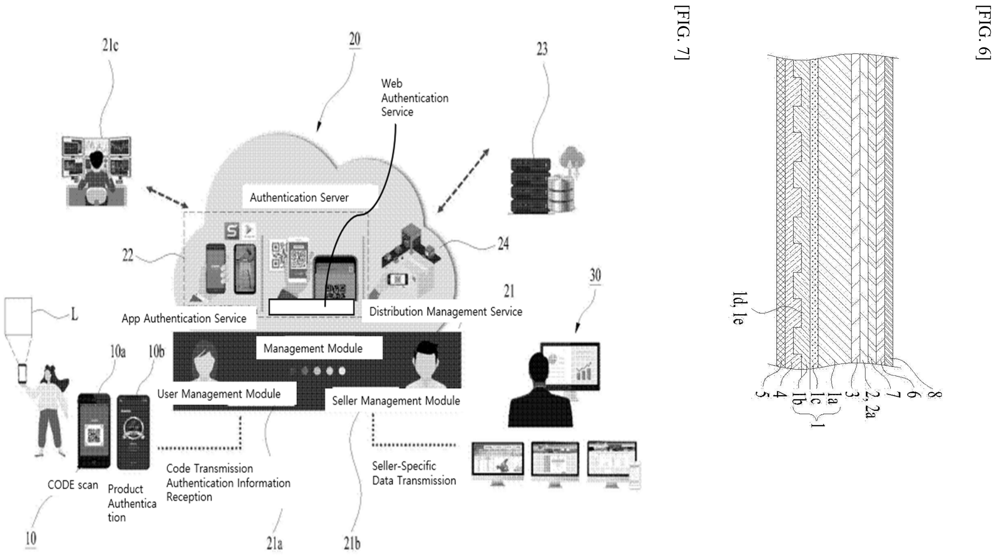

Meanwhile, the authentication label according to the present disclosure may include additional configurations to further enhance its authentication capability and security, and such additional configurations will be described in detail below with reference to the related drawings. FIG. 5 is a plan view illustrating another example of an authentication label according to the present disclosure, and FIG. 6 is a partial sectional view of another example of the authentication label taken along line B-B of FIG. 5.

As illustrated in FIGS. 5 and 6, the authentication label according to the present disclosure may further include a coating layer 6 provided on the second code layer 2 and configured to cover the second code 2a of the second code layer 2. The coating layer 6 may be configured to be peeled off by a physical force. More specifically, the coating layer 6 may be formed of an opaque scratch-off ink having high hiding power and may be printed on the second code layer 2 and the second code 2a thereof. Since the coating layer 6 is formed of such a scratch-off ink, it may be easily removed when scratched using a predetermined tool or a finger. As illustrated in FIG. 5(a), before being removed, the coating layer 6 may completely cover the second code 2a, thereby preventing an image of the second code 2a from being acquired not only by a conventional imaging device but also by X-ray inspection. Meanwhile, as illustrated in FIG. 5(b), the coating layer 6 may be easily removed by a physical force to expose the second code 2a. Thus, the coating layer 6 may be configured to selectively expose the second code 2a of the second code layer 2.

Since the second code 2a is completely concealed so as not to be exposed by the coating layer 6 before an actual authentication procedure is performed, it is possible to prevent the second code 2a from being copied using an imaging device and used to authenticate other counterfeit or forged products prior to the actual authentication procedure. In addition, once the coating layer 6 is removed and then the actual authentication procedure based on the exposed second code 2a is performed, the second authentication information of the second code 2a is stored in a remote authentication system, so that it becomes impossible to copy the exposed second code 2a and attempt duplicate authentication. Therefore, the coating layer 6 enables only one-time authentication using the second code 2a, thereby increasing the security of the authentication label according to the present disclosure.

In addition, when the coating layer 6 is scratched using a tool so as to remove the coating layer 6, the second code 2a located below the coating layer 6 may also be scratched and damaged. To prevent such damage, the authentication label may further include a protective layer 7 interposed between the coating layer 6 and the second code layer 2. The protective layer 7 covers the second code 2a of the second code layer 2, thereby protecting the second code 2a from damage that may occur during removal of the coating layer 6. For example, the protective layer 7 may be formed of an oriented polypropylene (OPP) film. Such an OPP film is transparent, glossy, has high mechanical strength, and exhibits excellent moisture resistance, and thus is effective in protecting the second code 2a.

In addition, the authentication label may further include an auxiliary printing layer 8 provided on the coating layer 6. As well illustrated in FIG. 5(a), the auxiliary printing layer 8 may include a message instructing that the coating layer 6 is to be removed only during the authentication procedure. Thus, the auxiliary printing layer 8 can effectively prevent unnecessary and arbitrary damage to the coating layer 6 prior to the authentication procedure.

As described above, the authentication label of the present disclosure basically has not only high security but also an improved appearance that does not interfere with the appearance of a product. The authentication label according to the present disclosure can enable more effective and efficient authentication through combination with an authentication system designed to match its characteristics. Such an authentication system according to the present disclosure will be described below with reference to additional drawings.

FIG. 7 is a schematic diagram illustrating a genuine-product authentication system using the genuine-product authentication label according to the present disclosure. With reference to FIG. 7, the configuration of the genuine-product authentication system according to the present disclosure will be described in detail below. Since FIGS. 1 to 6 include detailed configurations of the authentication label, which is a portion of the genuine-product authentication system of the present disclosure, the descriptions with reference to FIGS. 1 to 6 are basically included and referenced in the following description of the genuine-product authentication system unless otherwise specifically stated.

First, as illustrated in FIG. 7, the genuine-product authentication system (hereinafter, simply referred to as the "authentication system") of the present disclosure may include an authentication label L. The authentication label L is manufactured in advance by the authentication system, more specifically, by an authentication server 20 that substantially controls all functions of the authentication system, as will be described in detail later, and is attached to a product to be authenticated. Since such an authentication label L has already been described above with reference to FIGS. 1 to 6, the corresponding description is incorporated herein by reference, and a redundant description thereof will be omitted.

The authentication system may include a user terminal device 10. The terminal device 10 may be used to acquire authentication information from the authentication label for authenticating a target product, more specifically, to acquire codes including such authentication information. For example, the terminal device 10 may be configured to acquire, for authentication purposes, the first and second codes 1d, 1e, and 2a including the first and second authentication information, as illustrated in FIGS. 1 to 6. For convenience of description, the configurations of FIGS. 1 to 6 related to the authentication system will be directly cited below without additional explanation. Such a terminal device 10 may be basically used by a purchaser who has purchased a target product to authenticate the purchased product, and may also be used by other individuals or corporations that need to authenticate the target product. Thus, hereinafter, all persons who use the terminal device 10 for authentication will be collectively referred to as users, and for the same reason, the terminal device 10 will be understood as a user terminal device unless otherwise specified. Further, the terminal device 10 is basically required to have the capability to acquire codes 1d, 1e, and 2a from the authentication label and to process the acquired codes for authentication. For this reason, the terminal device 10 may be implemented as a mobile terminal such as a smartphone or a tablet PC, or as a fixed terminal such as a scanner of a POS system. FIG. 7 illustrates, as an example, the terminal device 10 implemented as the mobile terminal, i.e., a smartphone. Although the authentication system of the present disclosure will be described below with reference to such an example, the terminal device 10 may be implemented as various other types of terminal devices capable of acquiring codes from the authentication label.

More specifically, the terminal device 10 may include a display configured to visually output various information including codes and authentication information to a user. Through the display, the user may monitor an authentication process and authentication results. Further, the terminal device 10 may include various types of input devices. For example, the input devices may include a physical keypad, a virtual keypad on the display, a microphone, and a camera, and an authentication request and reception of authentication results may be performed through these input devices. Further, the terminal device 10 may include a storage device, and data required for the authentication process may be stored using the storage device, and a predetermined application for processing authentication may also be stored. Such an application is hereinafter referred to as an "authentication application," and may be a dedicated application configured to process only authentication information, or a general-purpose application capable of processing other information, for example, a web browser. In addition, the terminal device 10 may include a communication device that enables communication with an external device, and through the communication device, an authentication request may be transmitted to an external device, that is, an authentication server 20, and authentication results may be received from the authentication server 20. For example, the communication device may be configured as a device that uses a wireless network protocol, such as a cellular network or a Wi-Fi network protocol, in order to enable mobile communication of the terminal device 10, which is basically a mobile terminal. In addition, the communication device may be configured as a device that uses other short-range wireless communication technologies, such as Bluetooth, Radio Frequency Identification (RFID), Infrared Data Association (IrDA), Ultra Wideband (UWB), ZigBee, or Near Field Communication (NFC). Meanwhile, the communication device may also be configured as a device that uses a wired network protocol.

Furthermore, the terminal device 10 may include a control device, and the control device may implement intended functions of the terminal device 10 by controlling operations of the devices described above. The control device may include a processor and related electronic components, and may be electrically connected to the respective devices of the terminal device 10. Through such electrical connections, the control device may control the terminal device 10 as a whole to perform intended operations by exchanging electrical signals.

Such a control device may, for example, execute an authentication application stored in the storage device in response to a user command received through the input device, and transmit an authentication request received through the input device to the external device, that is, the authentication server 20, via the communication device. In addition, the control device may receive authentication results and other authentication-related information from the external device, that is, the authentication server 20, through the communication device, and store the received information in the storage device. The control device performs such a series of processes through the authentication application programmed to process them, and may output the results through an output device so as to be confirmed by the user. Thus, since the control device substantially controls all processes or modes performed in the terminal device 10, all such processes or modes may be features of the control device. Hereinafter, even if not explicitly described as being performed by the control device, all operations of the terminal device 10 may be understood as the features of the control device.

In addition, the authentication system of the present disclosure may include the authentication server 20 configured to perform the authentication procedure using codes acquired by the user terminal device 10. The authentication server 20 may store, in advance, the codes 1d, 1e, and 2a on the authentication label and authentication information corresponding thereto to perform authentication. Furthermore, the authentication server 20 may be configured to design and manufacture the authentication label itself in advance, including the codes 1d, 1e, and 2a and the authentication information. Thus, such an authentication server 20 may be operated by an authentication service provider that manufactures the authentication label and provides an authentication service based on the manufactured authentication label.

In order to provide such an authentication service, the authentication server 20 is be communicatively connected to the terminal device 10 and a seller's terminal device 30 (or server) described later via a wired or wireless network in an online environment, performs authentication between these devices 10 and 30, and functions as a hub that relays authentication-related information. Such an authentication server 20 may be implemented as a computer device capable of functioning as a conventional server that transmits and receives information through the wired or wireless network in a server-client infrastructure. Similarly to the other devices 10 and 30, the authentication server 20 may include an input/output device, a storage device, a communication device, and a control device, and may perform authentication and transmit authentication-related information by controlling operations of the other devices through the control device.

More specifically, the authentication server 20 may basically include a management module 21 configured to comprehensively manage all procedures performed in relation to data on the authentication label, that is, codes and authentication information. More specifically, the management module 21 may be configured to comprehensively manage the authentication procedure using the authentication label, and may also be configured to process various types of data generated in association with the authentication procedure. For example, as illustrated, the management module 21 may include a user management module 21a configured to process all transactions with the user terminal device 10 related to authentication, and a seller management module 21a configured to process all transactions with the seller terminal device 30 related to authentication. The user management module 21a may be configured, for example, to manage the actual authentication procedure using the authentication label, and the seller management module 21a may be configured to share various pieces of data generated as a result of the authentication procedure with the seller terminal device 30. In addition, the management module 21 may include a system management module 21c, and the system management module 21c may be configured to perform business-related procedures of the authentication service provider and system management of the authentication server 20.

Further, the authentication server 20 may include an authentication module 22 configured to perform actual authentication of a target product using the codes 1d, 1e, and 2a acquired from the authentication label. As described above, the authentication module 22 may include an app authentication service module configured to process authentication by interacting with a dedicated authentication application of the user terminal device 10. The authentication module 22 may also include a web authentication service module configured to process authentication via a general-purpose interface, for example, a web browser, instead of the dedicated authentication application. The authentication server 20 may further include a storage device 23, and the storage device 23 may basically store reference authentication information for performing authentication, and may also store various types of information and programs/applications required for performing the authentication procedure. Furthermore, the authentication server 20 may include a distribution management module 24. The distribution management module 24 may be configured to process authentication information of a target product obtained through the authentication procedure so that the authentication information may be used by the seller terminal device 30 for distribution and logistics management of the corresponding product. The processed authentication information may be transmitted to the seller terminal device 30 for distribution management of the target product by the seller management module 21b.

In the configuration of the authentication server 20 described above, all modules 21, 22, and 24 other than the storage device 23 may be configured as parts of a control device composed of a processor. That is, the modules 21, 22, and 24 may be implemented as lower-level electrical circuit architectures of the processor serving as the control device, or as agent programs mounted in and executed by such a processor. Thus, the functions of the authentication server 20 described above, in particular the functions of the modules 21, 22, and 24, are actually performed by the control device of the authentication server 20 in cooperation with other related devices. Therefore, all the functions of the authentication server 20 described above may be described as features of the control device of the authentication server 20.

Finally, the authentication system of the present disclosure may include a seller terminal device 30. As described above, since the codes 1d, 1e, and 2a of the authentication label include authentication information unique to a target product, the current status of the target product may be tracked and a history thereof may be generated using such unique authentication information. As mentioned above, such tracking and history generation may be performed by the authentication server 20, in particular by the distribution management module 24, and may be shared with the seller terminal device 30 by the seller management module 21b. The seller terminal device 30 may receive such a history and use it for distribution management, inventory management, and marketing management of the target product. Thus, the seller terminal device 30 may be primarily operated by a seller who sells the target product to be authenticated, and may efficiently perform management of the target product as described above based on data received from the authentication server 20. In addition, considering such functions, the seller terminal device 30 may also be operated by a manufacturer that manufactures the target product, and may further be operated by any business entities related to distribution and sales of the target product. Such a seller terminal device 30 may include an input/output device, a storage device, a communication device, and a control device, similarly to the other devices 10 and 20, so as to perform the above-described functions.

As described above, the authentication system of the present disclosure has a basic configuration for performing effective and efficient authentication using an authentication label having high security, and is capable of performing more stable authentication of a target product through more optimized control. For these reasons, an optimized control method for the authentication system has been devised, and will be described below with reference to additional drawings.

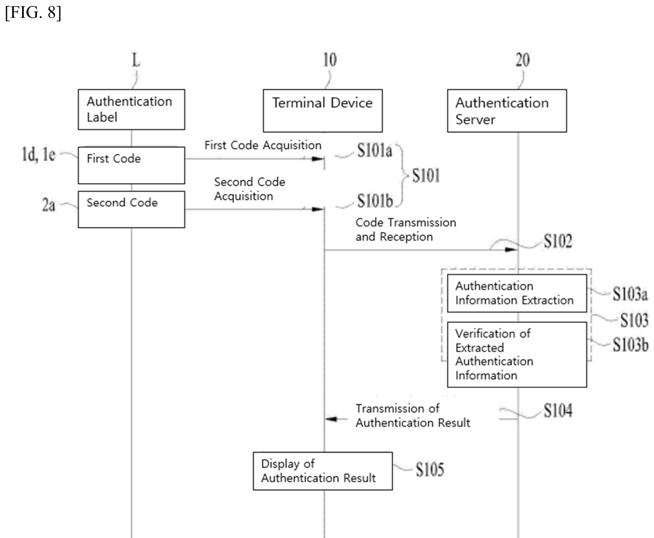

FIG. 8 is a signal processing diagram illustrating a genuine-product authentication method performed based on the genuine-product authentication system of FIG. 7. With reference to FIG. 8, the genuine-product authentication method of the present disclosure will be described in detail below. In addition, since FIGS. 1 to 7 include detailed configurations of the authentication label and the authentication system that form the basis of the genuine-product authentication method, descriptions made with reference to FIGS. 1 to 7 are incorporated by reference into the following description of the genuine-product authentication method, unless otherwise specified.

As will be apparent from the description below, since the authentication server 20 relays authentication information between the user terminal device 10 and the seller terminal device 30, the authentication method of the present disclosure may be substantially performed by the Authentication server 20. Thus, although steps performed in the respective devices 10 and 30 are executed by control devices of the corresponding devices 10 and 30, from an overall perspective, all steps of the authentication method according to the present disclosure may be described as features of the authentication server 20, more specifically, features of the control device thereof. Furthermore, as is well known, transmission and reception of predetermined information are performed relatively between related devices, and thus it should be understood that the following description encompasses changes in the relative roles of the devices with respect to transmission and reception of predetermined information, even if not explicitly stated. For example, in the following description, the reception of predetermined information by a first device from a second device also means the transmission of the corresponding information from the second device to the first device.

Referring to FIG. 8, first, the user terminal device 10 may acquire codes 1d, 1e, and 2a from the authentication label (S101). In this acquisition step S101, the terminal device 10 may scan and capture images of the codes 1d, 1e, and 2a using a mounted image acquisition device, for example, a camera (see state 10a of FIG. 7). More specifically, the terminal device 10 may first acquire an image of the first code 1d or 1e (S101a). When the first code is the first hologram 1d, the terminal device 10 may simply capture the three-dimensional image of the exposed first hologram 1d. On the other hand, when the first code is the second hologram 1e, prior to image capture, the three-dimensional image of the second hologram 1e may be exposed by irradiating light from a specific direction, and thereafter the exposed three-dimensional image may be captured by the terminal device 10. In addition, the terminal device 10 may further acquire an image of the second code 2a (S101b). In this second code acquisition step S101b, the partition layer 3 is first discolored by irradiation with light of a predetermined intensity or higher and by heating to a predetermined temperature or higher, thereby clearly exposing the planar pattern of the second code 2a, and thereafter the image of the exposed planar pattern of the second code 2a may be captured by the terminal device 10.

After the acquisition step S101, the terminal device 10 may transmit the acquired codes 1d, 1e, and 2a, more specifically images thereof, to the authentication server 20 through a wired or wireless network (S102). The authentication server 20 may receive the transmitted codes 1d, 1e, and 2a for performing an authentication procedure (S102). More specifically, the management module 21 of the authentication server 20, more precisely the user management module 21a, may receive the transmitted codes 1d, 1e, and 2a and assign the received codes 1d, 1e, and 2a to the authentication module 22 for authentication processing.

After the transmission and reception step S102, the authentication server 20, that is, the authentication module 22 thereof, may perform authentication of the target product using the received codes 1d, 1e, and 2a (S103).

In the authentication step S103, first, the authentication module 22 may extract authentication information from the received codes 1d, 1e, and 2a (S103a). More specifically, in the case of the first code 1d or 1e, the authentication module 22 may analyze and process the received image of the first code 1d or 1e and extract therefrom a clear three-dimensional image as first authentication information. In the case of the second code 2a, the authentication module 22 may decrypt the planar pattern according to a predetermined encryption rule and extract data in a specific format as second authentication information. Thereafter, the authentication module 22 may verify the extracted authentication information for authentication of the target product (S103b). More specifically, the authentication module 22 may compare the extracted first and second authentication information with reference authentication information stored in the storage device 30. As a result of the comparison, when the first and second authentication information matches the stored reference authentication information, the target product to which the authentication label including the received codes 1d, 1e, and 2a is attached may be determined to be a genuine product. On the other hand, when the first and second authentication information does not match the stored reference authentication information, the target product to which the authentication label including the received codes 1d, 1e, and 2a is attached may be determined to be a counterfeit or forged product.

After the authentication step S103, the authentication server 20, that is, the management module 21 thereof, may transmit the authentication result to the user terminal device 10 (S104), and the user terminal device 10 may display the transmitted authentication result so as to be recognized by the user (S105) (see state 10b of FIG. 7).

The above detailed description should not be construed as limiting in all respects, but should be considered illustrative. The scope of the present disclosure should be determined by a reasonable interpretation of the appended claims, and all modifications within the equivalent scope of the present disclosure are included within the scope of the present application.

## Claims

1. A genuine-product authentication label, comprising:
a first code layer configured to include a first code composed of first authentication information for a predetermined product;
a second code layer provided on the first code layer and including a second code composed of second authentication information for the predetermined product; and
a partition layer interposed between the first code layer and the second code layer and configured to selectively cover the first code of the first code layer in response to a change in a surrounding environment so that only the second code of the second code layer is visibly exposed,
wherein the first code of the first code layer is formed of a three-dimensional hologram, and the second code of the second code layer is formed of a two-dimensional pattern.

2. The genuine-product authentication label of claim 1, wherein the first code of the first code layer comprises a hologram configured to display a predetermined three-dimensional image only in response to light irradiated from a specific direction.

3. The genuine-product authentication label of claim 1, wherein:
the partition layer is configured to transition from a transparent state to an opaque state in response to irradiation with light having an intensity equal to or greater than a predetermined level, or
the partition layer is configured to transition from a transparent state to an opaque state in response to heating to a temperature equal to or greater than a predetermined temperature.

4. A genuine-product authentication system comprising:
a genuine-product authentication label provided on a predetermined product and including a code composed of authentication information for the predetermined product; and
an authentication server comprising:
a management module configured to receive the code of the genuine-product authentication label of the predetermined product from a predetermined terminal device; and
an authentication module configured to perform authentication of the predetermined product using the received code,
wherein the genuine- product authentication label comprises:
a first code layer configured to include a first code composed of first authentication information for the predetermined product;
a second code layer provided on the first code layer and including a second code composed of second authentication information for the predetermined product; and
a partition layer interposed between the first code layer and the second code layer and configured to selectively cover the first code of the first code layer in response to a change in a surrounding environment so that only the second code of the second code layer is visibly exposed,
wherein the first code of the first code layer is formed of a three-dimensional hologram, and the second code of the second code layer is formed of a two-dimensional pattern.

5. The genuine-product authentication system of claim 4, wherein:
the partition layer of the genuine-product authentication label is configured to transition from a transparent state to an opaque state in response to irradiation with light having an intensity equal to or greater than a predetermined level, or
the partition layer of the genuine-product authentication label is configured to transition from the transparent state to the opaque state in response to heating to a temperature equal to or higher than a predetermined temperature.
